# EUROPÄISCHE PATENTSCHRIFT

(11) **EP 0 988 124 B1**
(45) Veröffentlichungstag und Bekanntmachung des Hinweises auf die Patenterteilung: **13.03.2002**
(21) Anmeldenummer: 98934775.2
(22) Anmeldetag: 22.05.1998
(51) Int. Cl.: B22F 3/105

(54) **VERFAHREN UND PULVER ZUR HERSTELLUNG METALLISCHER FUNKTIONSMUSTER MITTELS LASERSINTERN**
METHOD AND POWDER FOR PRODUCING METAL FUNCTIONAL MODELS
PROCEDE ET POUDRE POUR LA PRODUCTION DE MODELES FONCTIONNELS METALLIQUES

(30) Priorität: 23.05.1997 DE 19721595
(43) Veröffentlichungstag der Anmeldung: 29.03.2000
(73) Patentinhaber: ATZ-EVUS Applikations- und Technikzentrum für Energieverfahrens-, Umwelt- und Strömungstechnik, 92237 Sulzbach-Rosenberg (DE)
(72) Erfinder: LANG, Adolf, D-90552 Röthenbach (DE); BINDER, Dietmar, D-96047 Bamberg (DE)
(74) Vertreter: Gassner, Wolfgang, Dr.
(86) Internationale Anmeldenummer: DE9801410
(87) Internationale Veröffentlichungsnummer: WO9852709

(56) Entgegenhaltungen:
- WO-A-96/09132

## Beschreibung

Die Erfindung betrifft ein Verfahren zur Herstellung metallischer Funktionsmuster nach dem Oberbegriff des Anspruchs 1. Sie betrifft ferner ein Pulver zur Herstellung metallischer Funktionsmuster nach dem Oberbegriff des Anspruchs 11.

Ein solches Verfahren und Pulver sind aus der WO 96/09132 bekannt. Dabei wird zur Herstellung metallischer Funktionsmuster möglichst hoher Maßhaltigkeit ein aus mindestens 3 Komponenten gebildetes Pulver eingesetzt. Das Pulver wird mittels Lasersintern in einer Gasatmosphäre gesintert, die als chemischen Bestandteil ein Metall der Eisengruppe enthält. Das Verfahren des Lasersinterns z.B. in der EP 0 714 725 beschrieben.

Das bekannte Verfahren erfordert den Einsatz eines mindestens aus 3 Komponenten gebildeten Pulvers. Der Sinterprozeß ist wegen des Erfordernisses einer besonderen, chemische Reaktionsbestandteile enthaltenden Gasatmosphäre aufwendig. Die hergestellten Funktionsmuster sind teuer.

Aus der WO 92/10343 ist es bekannt, ein aus zwei Metallen bestehendes Pulver zum Lasersintern zu verwenden. Dabei ist ein erstes Metall aufgrund seines hohen Schmelzpunkts für sich genommen mittels eines Laserstrahls nicht sinterbar. Um das erste Metall dennoch dem Lasersinterverfahren zugänglich zu machen, wird dem Pulver ein zweites niedrigschmelzendes Metall beigemischt, welches mittels eines Laserstahls aufschmelzbar und in der Lage ist, mit dem ersten Metall einen Mischkristall zu bilden. - Nachteiligerweise sind die nach diesem Verfahren hergestellten Funktionsmuster infolge eines beim Abkühlen auftretenden Volumenschwunds nicht ausreichend maßhaltig.

Aufgabe der vorliegenden Erfindung ist es, ein Verfahren und ein Pulver anzugeben, mit denen die Nachteile nach dem Stand der Technik überwunden werden. Es soll insbesondere ein vereinfachtes Verfahren zur Herstellung möglichst maßhaltiger Funktionsmuster mittels Lasersintern angegeben werden. Ferner soll ein Pulver bereitgestellt werden, das eine einfache Herstellung möglichst maßhaltiger Funktionsmuster gewährleistet.

Diese Aufgabe wird durch die Merkmale der Ansprüche 1 und 11 gelöst. Zweckmäßige Ausgestaltungen der Erfindung ergeben sich aus den Merkmalen der Ansprüche 2 bis 10 und 12 bis 22.

Nach der verfahrensseitigen Maßgabe der Erfindung ist vorgesehen, daß die zweite Komponente beim Schritt lit. c in eine zweite Phase oder ein zweites Phasengemisch umgewandelt wird, deren bzw. dessen spezifisches Volumen größer als das der ersten Phase bzw. des ersten Phasengemischs ist. - Mit dem vorgeschlagenen Verfahren ist es möglich, auf eine besondere, mindestens eine chemische Verbindung eines Eisengruppenmetalls enthaltende Gasatmosphäre zu verzichten. Ferner kann das Pulver aus lediglich zwei Komponenten hergestellt sein. Die Herstellung metallischer Funktionsmuster wird dadurch vereinfacht und verbilligt.

Vorteilhafterweise ist die erste Komponente des Pulvers aus Stahl gebildet, wobei der Stahl die Zusammensetzung X38CrMoV51 haben kann. Nach einem Ausgestaltungsmerkmal ist der Stahl vor dem Schritt lit. b im wesentlichen frei von Martensit. Nach dem Schritt lit. c kann er zum Teil in Martensit umgewandelt werden. - Als hochschmelzende Komponente eignet sich Stahl besonders gut als Gerüstbildner für das Funktionsmuster. Durch die Umwandlung in Martensit nach dem Schritt lit. c wird eine Vergrößerung des spezifischen Volumens hervorgerufen. Dadurch kann ein die Maßhaltigkeit beeinträchtigender Schwund kompensiert werden.

Nach einem weiteren vorteilhaften Ausgestaltungsmerkmal ist die zweite Komponente des Pulvers eine Kupferlegierung, wobei zweckmäßigerweise eine CuSn20-, CuSn16,7,- oder CuSn23-Legierung eingesetzt wird. Diese Kupferlegierung liegt vorzugsweise vor dem Schritt lit. b zu einem überwiegenden Anteil als α-Mischkristall vor. Eine derartige einen α-Mischkristall enthaltende Kupferlegierung wird zweckmäßigerweise mittels Pulververdüsung bei einer Abschreckrate von 10² bis 10⁵ K/s hergestellt. Der α-Mischkristall weist ein besonders geringes spezifisches Volumen auf.

Die Kupferlegierung liegt vorteilhafterweise nach dem Schritt lit. c zu einem überwiegenden Anteil als δ-Mischkristall vor. Der δ-Mischkristall weist ein deutlich größeres spezifisches Volumen als der α-Mischkristall auf. Ein die Maßhaltigkeit beeinträchtigender Schwund des Funktionsmusters wird kompensiert. Es können auf einfache Weise Funktionsmusters hoher Maßhaltigkeit hergestellt werden.

Nach einem weiteren Ausgestaltungsmerkmal wird das Pulver beim Schritt lit. b mit Schutzgas, vorzugsweise mit Argon, umspült, das erhöht weiter die Maßhaltigkeit der hergestellten Funktionsmuster.

Erfindungsgemäß ist des weiteren ein Pulver vorgesehen, bei dem die erste Komponente aus Stahl gebildet ist und die zweite Komponente durch zumindest teilweises aufschmelzen mittels Laserstrahlung und nachfolgendes abhühlen in eine zweite Phase oder ein zweites Phasengemisch umwandelbar ist, deren bzw. dessen spezifisches Volumen größer als das der ersten Phase bzw. des ersten Phasengemischs ist. - Mittels des erfindungsgemäßen Pulvers können äußerst maßhaltige Funktionsmuster hergestellt werden. Eine besondere, mindestens eine chemische Verbindung eines Eisengruppenmetalls enthaltende Gasatmosphäre ist dazu nicht erforderlich. Das erfindungsgemäße Pulver kann aus nur zwei Komponenten bestehen. Funktionsmuster sind damit einfach und kostengünstig herstellbar.

Neben den im Zusammenhang mit dem Verfahren beschriebenen Ausgestaltungsmerkmalen hat es sich hinsichtlich der Pulverzusammensetzung außerdem als vorteilhaft erwiesen, daß der Anteil der ersten Komponente im Bereich zwischen 20 und 80 Gew.%, vorzugsweise 40 bis 60 Gew.%, liegt. Die Korngrößen der ersten Komponente können im Bereich zwischen 10 und 120 µm, vorzugsweise zwischen 30 und 70 µm, liegen; die Korngrößen der zweiten Komponente können im Bereich zwischen 1 und 100 µm, vorzugsweise zwischen 5 und 35 µm, liegen.

Weitere vorteilhafte Ausgestaltungen der Erfindung werden anhand des nachfolgenden Ausführungsbeispiels beschrieben.

Eine erste Komponente eines erfindungsgemäßen Pulvers besteht zu 50 Gew.% aus Stahl der Zusammensetzung X38CrMoV51. Die mittlere Korngröße der aus der ersten Komponente hergestellten Pulverpartikel beträgt etwa 50µm. Eine zweite Komponente liegt ebenfalls in einem Anteil von 50 Gew.% vor. Sie besteht aus einer CuSn20-Legierung, die zu einem überwiegenden Anteil aus einem δ-phasenfreien Mischkristall gebildet ist. Die zweite Komponente liegt im Pulver z.B. als α-, α + β oder auch α + ε-Mischkristall vor. Deren mittlere Korngröße beträgt etwa 25µm. Es kann hier auch ein Gemisch von zwei Korngrößenfraktionen mit unterschiedlicher mittlerer Korngröße verwendet werden. Das ermöglicht eine höhere Schüttdichte des Pulvers.

Statt der vorgenannten zweiten Komponente können auch andere Kuperphasen als zweite Komponente eingesetzt werden. Solche Kupferphasen weisen in der Regel ein geringes spezifisches Volumen auf. Deren geometrisches Volumen beträgt üblicherweise weniger als 1,0 nm³. Die nachfolgende Tabelle gibt einen Überblick über weitere geeignete Kupferphasen.

| | Gitterparameter [nm] | | | | |
|---|---|---|---|---|---|
| Phasen | a | b | c | geo. Volumen [nm³] | Kristallstruktur |
| CuSn | 0,2978 | 0,2978 | 0,2978 | 0,02641 | kubisch |
| Cu₃Sn | 0,2749 | 0,27494 | 0,4322 | 0,02829 | hexagonal |
| (CuSn) | 0,3655 | 0,3655 | 0,3655 | 0,04883 | kubisch |
| Cu_{5,6}Sn | 0,3726 | 0,3762 | 0,3642 | 0,05056 | tetragonal |
| Cu₆Sn₅ | 0,42 | 0,42 | 0,509 | 0,07776 | hexagonal |
| (CuSn) | 0,456 | 0,537 | 0,432 | 0,10578 | orthorombisch |
| Cu₁₀Sn₃ | 0,733 | 0,733 | 0,787 | 0,3662 | hexagonal |
| Cu₆Sn₅ | 1,1033 | 0,7294 | 0,963 | 0,78171 | monoklin |
| Cu₃Sn | 0,551 | 0,381 | 0,4319 | 0,90669 | orthorombisch |
| Cu_{327,92}Sn_{88,08} | 1,7964 | 1,7964 | 1,7964 | 5,79708 | kubisch |
| Cu₈₁Sn₂₂ | 1,798 | 1,798 | 1,798 | 5,81258 | kubisch |
| Cu₄₁Sn₁₁ | 1,798 | 1,798 | 1,798 | 5,81258 | kubisch |
| Cu_{40,5}Sn₁₁ | 1,8011 | 1,8011 | 1,8011 | 5,8427 | kubisch |

Das geometrische Volumen der δ-phasenhaltigen kubischen Mischkristalle liegt über 5,0 nm³. Durch die Phasenumwandlung wird eine Ausdehnung des Volumens der zweiten Komponente hervorgerufen. Auch das Volumen der ersten Komponente kann eine Volumenzunahme erfahren, wenn als erste Komponente weitgehend martensitfreier Stahl eingesetzt wird. Durch die Volumenzunahmen wird der beim Lasersintern auftretende Schwund des Funktionsmusters kompensiert. Gleichzeitig wird die Oberflächenqualität des Funktionsmusters und dessen mechanische Festigkeit verbessert.

Anstatt der Kupferlegierung können auch andere geeignete Legierungen Verwendung finden, die eine erste Phase bilden, die infolge der Bildung eines Mischkristalls in eine zweite Phase mit einem größeren spezifischen bzw. geometrischen Volumen umwandelbar sind. Als geeignet haben sich Kupfer/Siliziumlegierungen und Silizium erwiesen.

Die Maßhaltigkeit des Funktionsmusters, deren Oberflächengüte und mechanische Festigkeit kann in Abhängigkeit der jeweiligen geometrischen Form optimiert werden. Das erfolgt durch den Fachmann geläufige Maßnahmen, wie die Wahl einer geeigneten Kupferlegierung, der Einstellung des Mischungsverhältnisses zwischen erster und zweiter Komponente, der Wahl geeigneter Pulverpartikelgrößen für die erste und zweite Komponente und ggf. der Beimischung nichtmetallischer weiterer Komponenten. Auch die Wahl einer geeigneten Schutzgasatmosphäre hat Einfluß auf die Qualität des Funktionsmusters. Als vorteilhaft hat es sich erwiesen, während des Lasersinterns das Pulver mit einem Schutzgas, insbesondere mit Argon, zu umspülen.

## Patentansprüche

1. Verfahren zur Herstellung metallischer Funktionsmuster umfassend die folgenden Schritte:
a) Schichtweises Auftragen eines aus mehreren metallischen Komponenten gebildeten Pulvers auf einen Untergrund,
wobei eine erste Komponente einen höheren Schmelzpunkt als eine zweite Komponente aufweist und die zweite Komponente in einer ersten Phase oder einem ersten Phasengemisch vorliegt,
b) Erhitzen des Pulvers mittels Laserstrahlung, so daß die zweite Komponente zumindest teilweise aufschmilzt und die erste Komponente benetzt,
c) Abkühlen, so daß das Pulver verfestigt wird,
**dadurch gekennzeichnet, daß**
die zweite Komponente beim Schritt lit. c in eine zweite Phase oder ein zweites Phasengemisch umgewandelt wird, deren bzw. dessen spezifisches Volumen größer als das der ersten Phase bzw. des ersten Phasengemischs ist.

2. Verfahren nach Anspruch 1, wobei die erste Komponente des Pulvers aus Stahl gebildet ist.

3. Verfahren nach Anspruch 2, wobei der Stahl die Zusammensetzung X38CrMoV51 hat.

4. Verfahren nach einem der Ansprüche 2 oder 3, wobei der Stahl vor dem Schritt lit. b im wesentlichen frei von Martensit ist.

5. Verfahren nach einem der Ansprüche 2 bis 4, wobei der Stahl nach dem Schritt lit. b zum Teil in Martensit umgewandelt wird.

6. Verfahren nach einem der vorhergehenden Ansprüche, wobei die zweite Komponente des Pulvers eine Kupferlegierung ist.

7. Verfahren nach Anspruch 6, wobei die Kupferlegierung eine CuSn20-, CuSn16,7- oder CuSn23-Legierung ist.

8. Verfahren nach Anspruch 6 oder 7, wobei die Kupferlegierung vor dem Schritt lit. b zu einem überwiegenden Anteil aus einem, vorzugsweise mit einer Abschreckrate von 10² bis 10⁵ K/s hergestellten, δ-phasenfreien Mischkristall gebildet ist.

9. Verfahren nach einem der Ansprüche 6 bis 8, wobei die Kupferlegierung beim Schritt lit. c zu einem überwiegenden Anteil in einen δ-Mischkristall umgewandelt wird.

10. Verfahren nach einem der vorhergehenden Ansprüche, wobei das Pulver beim Schritt lit. b mit Schutzgas, vorzugsweise mit Argon, umspült wird.

11. Pulver zur Durchführung des Verfahrens nach Anspruch 1 mit mindestens zwei metallischen Komponenten, wobei eine erste Komponente einen höheren Schmelzpunkt als eine zweite Komponente aufweist und die zweite Komponente in einer ersten Phase oder einem ersten Phasengemisch vorliegt, **dadurch gekennzeichnet, daß** die erste Komponente aus Stahl gebildet ist und daß die zweite Komponente durch zumindest teilweises Aufschmelzen mittels Laserstahlung und nachfolgendes Abkühlen in eine zweite Phase oder ein zweites Phasengemisch umwandelbar ist, deren bzw. dessen spezifisches Volumen größer als das der ersten Phase bzw. des ersten Phasengemischs ist.

12. Pulver nach Anspruch 11, wobei der Stahl die Zusammensetzung X38CrMoV51 hat.

13. Pulver nach Anspruch 11 oder 12, wobei der Stahl im wesentlichen frei von Martensit ist.

14. Pulver nach einem der Ansprüche 11 bis 13, wobei der Stahl nach dem Erhitzen zum Teil als Martensit vorliegt.

15. Pulver nach einem der Ansprüche 11 bis 14, wobei die zweite Komponente eine Kupferlegierung ist.

16. Pulver nach Anspruch 15, wobei die Kupferlegierung eine CuSn20-, CuSn16,7- oder CuSn23-Legierung ist.

17. Pulver nach Ansprüche 15 oder 16, wobei die Kupferlegierung zu einem überwiegenden Anteil aus einem, vorzugsweise mit einer Abschreckrate von 10² bis 10⁵ K/s hergestellten, δ-phasefreien Mischkristall gebildet ist.

18. Pulver nach einem der Ansprüche 15 bis 17, wobei die zweite Phase oder das zweite Phasengemisch zu einem überwiegenden Anteil als δ-Mischkristall vorliegt.

19. Pulver nach einem der Ansprüche 11 bis 18, wobei der Anteil der ersten Komponente im Bereich zwischen 20 und 80 Gew.%, vorzugsweise 40 bis 60 Gew.%, beträgt.

20. Pulver nach einem der Ansprüche 11 bis 19, wobei die Korngrößen der ersten Komponente im Bereich zwischen 10 und 120 µm, vorzugsweise zwischen 30 und 70 µm, liegen.

21. Pulver nach einem der Ansprüche 11 bis 20, wobei die Korngrößen der zweiten Komponente im Bereich zwischen 1 und 100 µm, vorzugsweise zwischen 5 und 35 µm, liegen.

## Claims

1. A method for the manufacture of metal functional models comprising the following steps:
a) application in the form of layers of a powder consisting of several metal constituents onto an undersurface, wherein a first constituent has a higher melting point than a second constituent and the second constituent is present in a first phase or a first phase mixture,
b) heating the powder by means of laser radiation so that the second constituent melts at least partially and wets the first constituent,
c) cooling, so that the powder solidifies,
**characterised in that**
the second constituent in step lit. c is converted into a second phase or a second phase mixture, the specific volume of said second phase or second phase mixture being larger than that of the first phase or of the first phase mixture.

2. A method according to Claim 1, wherein the first constituent of the powder consists of steel.

3. A method according to Claim 2, wherein the steel has the composition X38CrMoV51.

4. A method according to one of Claims 2 or 3, wherein prior to step lit. b the steel is substantially free of martensite.

5. A method according to one of Claims 2 to 4, wherein the steel is partially converted into martensite after step lit. b.

6. A method according to one of the preceding Claims, wherein the second constituent of the powder is a copper alloy.

7. A method according to Claim 6, wherein the copper alloy is a CuSn20, CuSn16.7 or CuSn23 alloy.

8. A method according to Claim 6 or 7, wherein prior to step lit. b a preponderant part of the copper alloy consists of a δ-phase-free mixed crystal which is preferably produced with a quenching rate of 10² to 10⁵ K/s.

9. A method according to one of Claims 6 to 8, wherein a preponderant part of the copper alloy in step lit. c is converted into a δ-mixed crystal.

10. A method according to one of the preceding Claims, wherein the powder in step lit. b is flushed with inert gas, preferably with argon.

11. A powder for performing the method according to Claim 1 with at least two metal constituents, wherein a a first constituent has a higher melting point than a second constituent and the second constituent is present in a first phase or a first phase mixture,
**characterised in that** the first constituent consists of steel
**and in that** the second constituent can be converted into a second phase or second phase mixture by at least partial melting by means of laser radiation and subsequent cooling, the specific volume of the second phase or second phase mixture being larger than that of the first phase or the first phase mixture.

12. A powder according to Claim 11, wherein the steel has the composition X38CrMoV51.

13. A powder according to Claim 11 or 12, wherein the steel is substantially free of martensite.

14. A powder according to one of Claims 11 to 13, wherein after heating the steel is to some extent present as martensite.

15. A powder according to one of Claims 11 to 14, wherein the second constituent is a copper alloy.

16. A powder according to Claim 15, wherein the copper alloy is a CuSn20, CuSn16.7 or CuSn23 alloy.

17. A powder according to Claims 15 or 16, wherein a preponderant part of the copper alloy consists of a δ-phase-free mixed crystal, preferably produced with a quenching rate of 10² to 10⁵ K/s.

18. A powder according to one of Claims 15 to 17, wherein a preponderant part of the second phase or the second phase mixture is present as δ mixed crystal.

19. A powder according to one of Claims 11 to 18, wherein the proportion of the first constituent lies in the range between 20 and 80 % by weight, preferably 40 to 60 % by weight.

20. A powder according to one of Claims 11 to 19, wherein the grain sizes of the first constituent lie in the range between 10 and 120 µm, preferably between 30 and 70 µm.

21. A powder according to one of Claims 11 to 20, wherein the grain sizes of the second constituent lie in the range between 1 and 100 µm, preferably between 5 and 35 µm.

## Revendications

1. Procédé de fabrication de modèles fonctionnels métalliques, comprenant les étapes consistant à :
a) déposer par couches une poudre constituée de plusieurs composants métalliques sur un substrat,
un premier composant présentant un point de fusion supérieur à celui d'un second composant et le second composant se présentant dans une première phase ou dans un premier mélange de phases,
b) chauffer la poudre au moyen d'un rayon laser, de telle sorte que le second composant fonde au moins partiellement et imprègne le premier composant,
c) refroidir, de telle sorte que la poudre se solidifie,
**caractérisé en ce que**
le second composant lors de l'étape c) est transformé en une seconde phase ou en un second mélange de phases, dont le volume spécifique est supérieur à celui de la première phase ou du premier mélange de phases.

2. Procédé selon la revendication 1, dans lequel le premier composant de la poudre est constitué d'acier.

3. Procédé selon la revendication 2, dans lequel l'acier présente la composition X38CrMoV51.

4. Procédé selon la revendication 2 ou 3, dans lequel l'acier est essentiellement dépourvu de martensite avant l'étape b).

5. Procédé selon l'une des revendications 2 à 4, dans lequel l'acier est pour partie transformé en martensite après l'étape b).

6. Procédé selon l'une quelconque des revendications précédentes, dans lequel le second composant de la poudre est un alliage de cuivre.

7. Procédé selon la revendication 6, dans lequel l'alliage de cuivre est un alliage CuSn20, CuSn16,7 ou CuSn23.

8. Procédé selon la revendication 6 ou 7, dans lequel l'alliage de cuivre est composé avant l'étape b) pour majeure partie d'une solution solide dépourvue de phase δ, de préférence préparée avec une vitesse de trempe de 10² à 10⁵ K/s.

9. Procédé selon l'une des revendications 6 à 8, dans lequel l'alliage de cuivre est transformé pour majeure partie en une phase solide δ au cours de l'étape c).

10. Procédé selon l'une quelconque des revendications précédentes, dans lequel la poudre est rincée avec un gaz protecteur, de préférence de l'argon, au cours de l'étape b).

11. Poudre pour la mise en oeuvre du procédé selon la revendication 1, constituée d'au moins deux composants métalliques, un premier composant présentant un point de fusion supérieur à celui d'un second composant, et le second composant se présentant dans une première phase ou dans un premier mélange de phases, **caractérisée en ce que** le premier composant est constitué d'acier et que le second composant peut être transformé, par fusion au moins partielle à l'aide d'un rayon laser, puis refroidissement ultérieur, en une seconde phase ou en un second mélange de phases, dont le volume spécifique est supérieur à celui de la première phase ou du premier mélange de phases.

12. Poudre selon la revendication 11, dans laquelle l'acier présente la composition X38CrMoV51.

13. Poudre selon la revendication 11 ou 12, dans laquelle l'acier est essentiellement dépourvu de martensite.

14. Poudre selon l'une des revendications 11 à 13, dans laquelle l'acier, après chauffage, se présente pour partie sous forme de martensite.

15. Poudre selon l'une des revendications 11 à 14, dans laquelle le second composant est un alliage de cuivre.

16. Poudre selon la revendication 15, dans laquelle l'alliage de cuivre est un alliage CuSn20, CuSn16,7 ou CuSn23.

17. Poudre selon la revendication 15 ou 16, dans laquelle l'alliage de cuivre se compose pour majeure partie d'une solution solide dépourvue de phase δ, de préférence préparée avec une vitesse de trempe de 10² à 10⁵ K/s.

18. Poudre selon l'une des revendications 15 à 17, dans laquelle la seconde phase ou le second mélange de phases se présente pour majeure partie sous forme d'une phase solide δ.

19. Poudre selon l'une des revendications 11 à 18, dans laquelle la proportion du premier composant est comprise entre 20 et 80 % en poids, de préférence entre 40 et 60 % en poids.

20. Poudre selon l'une des revendications 11 à 19, dans laquelle la granulométrie du premier composant est comprise entre 10 et 120 µm, de préférence entre 30 et 70 µm.

21. Poudre selon l'une des revendications 11 à 20, dans laquelle la granulométrie du second composant est comprise entre 1 et 100 µm, de préférence entre 5 et 35 µm.
